# FASCICULE DE BREVET EUROPEEN

(11) **EP 2 997 271 B1**
(45) Date de publication et mention de la délivrance du brevet: **04.01.2017**
(21) Numéro de dépôt: 14727871.7
(22) Date de dépôt: 29.04.2014
(51) Int. Cl.: F16C 17/02, B21D 15/02, F16C 33/14

(54) **PROCÉDÉ DE FABRICATION D'UN RAIDISSEUR ONDULÉ DE PALIER À FEUILLES ET RAIDISSEUR OBTENU**
HERSTELLUNGSVERFAHREN EINER GEWELLTEN VERSTEIFUNG EINES LAGERS UND EINE SOLCH ERHALTENE VERSTEIFUNG
METHOD OF MANUFACTURING A CORRUGATED STIFFENER OF A BEARING AND SUCH OBTAINED STIFFENER

(30) Priorité: 16.05.2013 FR 1354402
(43) Date de publication de la demande: 23.03.2016
(73) Titulaire: Liebherr-Aerospace Toulouse SAS, 31200 Toulouse (FR)
(72) Inventeur: ROCCHI, Jérôme, F-31380 Roqueseriere (FR); GRAU, Grégory, F-82210 Castelmayran (FR); LETRANGE, Frédéric, F-31130 Balma (FR)
(74) Mandataire: Cabinet BARRE LAFORGUE & associés
(86) Numéro de dépôt international: PCT/FR2014/051021
(87) Numéro de publication internationale: WO 2014/184460

(56) Documents cités:
- US-A- 4 277 113
- US-A- 4 385 787
- US-A- 4 562 039
- US-A1- 2011 033 142

## Description

L'invention concerne un procédé de fabrication d'un raidisseur ondulé de palier à feuilles. Elle s'étend au raidisseur obtenu par ce procédé.

Dans le présent texte, on désigne par « palier à feuilles » un palier radial ou un palier de butée axiale comportant des feuilles permettant de créer un film fluide de sustentation permettant la rotation d'une pièce par rapport à une autre par l'intermédiaire de ce film fluide, en particulier un gaz et plus spécifiquement de l'air. De tels paliers à feuilles sont en général utilisés pour de très grandes vitesses de rotation et des charges axiales ou radiales relativement faibles par rapport aux charges supportées par d'autres types de paliers (à billes ou hydrodynamiques par exemple).

De tels paliers à feuilles (cf. par exemple FR2670545, FR2700821...) sont en général constitués d'une première pièce sur laquelle des feuilles élastiques sont fixées par un bord orienté orthogonalement au sens de rotation et dont le bord opposé s'étend, dans le sens de rotation, en direction de la deuxième pièce afin de réaliser, lorsque l'ensemble est mis en rotation, un « coin d'air » permettant d'assurer la sustentation de la deuxième pièce par rapport à la première pièce. Chaque feuille est maintenue à distance de la première pièce par au moins un raidisseur ondulé interposé entre la feuille et ladite première pièce.

De tels raidisseurs ondulés sont des pièces extrêmement sensibles et doivent présenter des caractéristiques mécaniques particulièrement élevées, notamment une résistance en traction supérieure à 1000 MPa, une limite d'élasticité 0,2 % supérieure à 700 MPa, un allongement minimum supérieur à 20 % et une dureté (sur la section) supérieure à 390 HV.

Pour présenter de telles caractéristiques combinées avec la présence des ondulations, les procédés de fabrication connus de ces raidisseurs ondulés sont longs et coûteux. Ils consistent à déformer plastiquement une tôle plane en superalliage métallique à durcissement structural (par précipitation) par emboutissage pour y former les ondulations, puis à enrouler la tôle ainsi ondulée entre deux bagues cylindriques sous une forme cylindrique de révolution, et à réaliser un traitement thermique de durcissement de cette dernière (typiquement à plus de 700°C sur une durée d'au moins 20h) pour obtenir les caractéristiques mécaniques souhaitées. US 4277113 décrit de partir d'une feuille d'Inconel X-750 recuit, de fendre et de former cette feuille dans une matrice pour obtenir les ondulations, de revêtir ensuite cette feuille d'une couche de cuivre, et de soumettre l'ensemble à un traitement thermique à plus de 700° C pendant 20 heures permettant de procurer une grande résistance aux températures à l'Inconel, et d'obtenir la diffusion du cuivre dans la portion supérieure de la feuille.

Ces procédés connus présentent divers inconvénients. Tout d'abord, ils imposent des manipulations aussi bien de la tôle ondulée après emboutissage que des outillages de traitement thermique, qui sont longues, coûteuses, et particulièrement délicates pour éviter toute déformation localisée intempestive de la forme des ondulations obtenues par emboutissage. En outre, le traitement thermique final de durcissement structural, nécessaire avec un superalliage à durcissement structural, est une opération coûteuse et consommatrice d'énergie. Ces procédés connus ne sont donc pas exploitables à l'échelle industrielle dans les applications de fabrication en très grandes séries, comme par exemple dans le domaine de la fabrication des automobiles.

L'invention vise donc à pallier ces inconvénients en proposant un procédé de fabrication qui soit fiable, rapide, peu coûteux, minimise les manipulations des raidisseurs ondulés, et soit compatible avec une exploitation à l'échelle industrielle en très grandes séries.

Pour ce faire, l'invention concerne un procédé de fabrication d'un raidisseur ondulé de palier à feuilles dans lequel :
- on part d'une tôle en superalliage métallique austénitique à base de nickel,
- on déforme plastiquement la tôle pour lui conférer la forme du raidisseur ondulé,
caractérisé en ce que :
- on choisit une tôle en superalliage austénitique à base de nickel présentant une limite d'élasticité supérieure à 500 MPa,
- on soumet la tôle à au moins une étape de déformation plastique en flexion par emboutissage selon toute son épaisseur avec une énergie de déformation supérieure à 10 kJ en une durée inférieure à 10⁻⁵ de façon à créer des ondulations en flexion.

Les inventeurs ont en effet constaté avec surprise qu'il est en réalité possible de s'affranchir totalement des opérations longues et coûteuses de traitement thermique, et d'obtenir un raidisseur ondulé par au moins une étape -notamment une étape unique- de déformation plastique en flexion par emboutissage à très haute vitesse et très haute énergie d'une tôle en superalliage à base de nickel austénitique à hautes caractéristiques, notamment présentant une limite d'élasticité supérieure à 500 MPa, de préférence supérieure à 700 MPa. En effet, il s'avère que lors d'une telle déformation plastique en flexion à très haute vitesse et très haute énergie par emboutissage pour réaliser des ondulations de déformation plastique en flexion de la tôle, un tel superalliage se déforme en flexion avec une homogénéisation des contraintes dans le matériau, et sensiblement sans phénomène de retour élastique après déformation, ce qui permet d'obtenir des caractéristiques dimensionnelles et des propriétés mécaniques extrêmement précises, et supprime la nécessité d'effectuer un traitement thermique de durcissement et/ou de relaxation après déformation. Alors qu'un traitement thermique de durcissement et/ou de relaxation d'un superalliage après déformation plastique en flexion est considéré comme absolument indispensable, un procédé selon l'invention permet au contraire, contre toute attente, de s'affranchir de tout traitement thermique du superalliage après déformation plastique pour réaliser les ondulations du raidisseur. Il permet aussi de s'affranchir de toute étape de formage ultérieure, la forme finale du raidisseur pouvant être obtenue en une seule étape de déformation plastique en flexion par emboutissage à très haute vitesse et très haute énergie d'une tôle en superalliage à base de nickel austénitique, sans retour élastique après déformation.

Il est à noter à ce titre qu'un procédé selon l'invention dans lequel on réalise des ondulations en flexion par déformation plastique d'une tôle, se distingue des procédés de formage superficiel de pièces ou d'autofrettage de tubes qui n'entraînent que des déformations plastiques de compression sur une partie d'épaisseur, en général faible, de la pièce et dans lesquels de tels traitements thermiques ne sont pas toujours nécessaires, et même néfastes à l'effet recherché de création de contraintes résiduelles différentielles dans l'épaisseur.

En particulier, dans un procédé selon l'invention, on peut utiliser une tôle en superalliage ayant fait l'objet au préalable d'un traitement thermique de durcissement -notamment de durcissement structural (par précipitation)- pour lui conférer les caractéristiques mécaniques souhaitées pour le raidisseur ondulé, la déformation plastique en flexion à laquelle la tôle est ensuite soumise n'affectant sensiblement pas ses caractéristiques mécaniques. Ainsi, l'invention permet en particulier de procéder à des tests de contrôle de qualité et de caractéristiques mécaniques sur la tôle avant de la soumettre à la déformation plastique en flexion, sans risque de détérioration de la géométrie du raidisseur ondulé du fait de ces tests.

Avantageusement et selon l'invention, on choisit une tôle en superalliage présentant une limite d'élasticité supérieure à 700 MPa, une résistance en traction supérieure à 1000 MPa et un allongement à la rupture supérieur à 20 %.

Différentes compositions de superalliage à base de nickel - notamment comprenant plus de 50 % de nickel- peuvent être envisagées dans le cadre d'un procédé selon l'invention. Plus particulièrement, avantageusement et selon l'invention, on choisit une tôle en superalliage comprenant entre 5 % et 9 % de fer, plus de 70 % de nickel et cobalt dont au plus 1 % de cobalt, entre 14 % et 17 % de chrome. Ce superalliage peut être du type à durcissement structural (par précipitation) et comprend alors également de l'aluminium et du titane, notamment entre 0,4 % et 1 % d'aluminium et entre 2,25 % et 2,70 % de titane. Ainsi, avantageusement et selon l'invention, on choisit un superalliage comprenant en outre moins de 0,08 % de carbone, moins de 0,3 % de manganèse, moins de 0,5 % de silicium, moins de 0,01 % de soufre, entre 0,4 % et 1 % d'aluminium, entre 2,25 % et 2,70 % de titane, moins de 0,5 % de cuivre, et entre 0,7 % et 1,2 % de niobium et tantale. Par exemple, avantageusement, on choisit une tôle en superalliage Inconel® -notamment en superalliage Inconel® X 750.

Il est à noter cependant que c'est un avantage de l'invention que de permettre l'utilisation d'un superalliage ne présentant pas nécessairement un durcissement structural, puisque les caractéristiques mécaniques du raidisseur sont obtenues avant même l'étape de déformation plastique en flexion.

Les dimensions de la tôle et des ondulations réalisées par déformation plastique en flexion à haute vitesse et haute énergie sont choisies en fonction de celles du raidisseur ondulé à fabriquer. Dans certains modes de réalisation, avantageusement et selon l'invention, on choisit une tôle plane présentant une épaisseur comprise entre 0,05 mm et 0,4 mm, et on réalise des ondulations en flexion présentant une hauteur de chaque ondulation comprise entre 0,2mm et 1mm, une longueur de chaque ondulation comprise entre 3mm et 10mm, et un pas entre les ondulations compris entre 4mm et 10mm.

En outre, avantageusement et selon l'invention, lors de ladite au moins une étape de déformation plastique en flexion, on réalise aussi un repli d'accroche formant un bord extrême du raidisseur. Les formes et dimensions de ce repli d'accroche sont adaptées pour permettre l'accroche du raidisseur à un stator de palier à feuilles.

Par ailleurs, avantageusement et selon l'invention, lors de ladite au moins une étape de déformation plastique en flexion on soumet la tôle à une énergie de déformation inférieure à 35 kJ. En outre la durée de l'étape de déformation plastique en flexion est avantageusement supérieure à 10⁻¹⁰s.

Plusieurs variantes de réalisation sont envisageables pour obtenir cette gamme de vitesse et d'énergie de déformation plastique. On peut en particulier utiliser différentes techniques de forgeage à froid à haute vitesse et haute énergie, par exemple par explosion et/ou propulsion électromagnétique.

Avantageusement et selon l'invention, on déforme la tôle par emboutissage selon une direction au moins sensiblement normale à la tôle.

Pour ce faire, dans un mode de réalisation particulièrement avantageux et conforme à l'invention, on enroule la tôle sous forme d'un cylindre de révolution entre une matrice externe présentant une face cylindrique interne dotée de motifs en creux correspondant aux ondulations -et au repli d'accroche- à former, et un poinçon cylindrique en élastomère de caoutchouc, et on comprime axialement ledit poinçon cylindrique, l'expansion radiale du poinçon cylindrique entraînant l'emboutissage radial de la tôle dans la matrice pour former lesdites ondulations en flexion. Avantageusement et selon l'invention, on utilise un élastomère présentant un coefficient de Poisson le plus élevé possible, notamment compris entre 0,3 et 0,5 inclus, plus particulièrement de l'ordre de 0,5. Plus particulièrement, avantageusement et selon l'invention, on comprime axialement ledit poinçon cylindrique à l'aide d'au moins un piston présentant une masse supérieure à 200 g entraîné axialement à une vitesse supérieure à 10 m/s -notamment par propulsion électromagnétique, ou par un dispositif du type marteau-pilon, ou à explosion à la façon d'un moteur thermique ; la déformation plastique peut même être obtenue par génération d'une explosion gazeuse directement à l'intérieur de la tôle dans la matrice... On peut utiliser un piston écrasant le poinçon contre un fond de la matrice, ou deux pistons entraînés axialement en sens opposés contre les deux extrémités axiales du poinçon, l'alésage de la matrice étant traversant.

L'invention s'étend à un raidisseur obtenu par un procédé selon l'invention. Elle concerne donc en particulier un raidisseur ondulé de palier à feuilles caractérisé en ce qu'il présente une résistance en traction supérieure à 1000 MPa, une limite d'élasticité 0,2 % supérieure à 720 MPa, un allongement à la rupture supérieur à 20 % et une dureté supérieure à 390 HV.

L'invention s'étend également à un procédé de fabrication d'un palier à feuilles dans lequel on fabrique un raidisseur ondulé à partir d'une tôle en superalliage métallique austénitique à base de nickel en déformant plastiquement la tôle pour lui conférer la forme du raidisseur ondulé, et on monte chaque raidisseur ondulé dans le palier, caractérisé en ce qu'on fabrique le raidisseur ondulé par mise en oeuvre d'un procédé de fabrication d'un raidisseur ondulé conforme à l'invention selon une forme et des dimensions permettant son montage directement dans le palier à feuilles, et en ce qu'on monte le raidisseur ondulé directement issu de ce procédé de fabrication selon l'invention dans le palier à feuilles. Ainsi, l'invention permet la fabrication d'un raidisseur ondulé directement aux formes et dimensions appropriées pour son montage direct dans le palier à feuilles, sans nécessiter aucune étape intermédiaire de traitement thermique ou d'usinage.

L'invention s'étend également à un palier à feuilles comprenant au moins un raidisseur ondulé selon l'invention, c'est-à-dire au moins un raidisseur ondulé obtenu par un procédé de fabrication selon l'invention.

L'invention concerne également un procédé de fabrication, un raidisseur ondulé de palier à feuilles, un procédé de fabrication d'un palier à feuilles et un palier à feuilles caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif d'exemples de réalisation de l'invention et qui se réfère aux figures annexées dans lesquelles :
- la figure 1 est une vue schématique en coupe transversale d'un exemple de palier à feuilles,
- la figure 2 est une vue schématique en perspective éclatée d'un dispositif permettant la mise en oeuvre d'un procédé selon l'invention,
- la figure 3 est une vue schématique en coupe axiale du dispositif de la figure 2 lors de la mise en place des différents éléments constitutifs de ce dernier, avant mise en oeuvre d'une étape de déformation plastique selon l'invention,
- la figure 4 est une vue schématique en coupe axiale du dispositif de la figure 2, en fin d'étape de déformation plastique selon l'invention,
- la figure 5 est une vue schématique en coupe transversale de la forme d'un exemple de raidisseur ondulé selon l'invention obtenu par le procédé selon l'invention.

Sur les figures, les différentes échelles ne sont pas respectées, notamment en ce qui concerne l'épaisseur de pièces, et ce à des fins d'illustration.

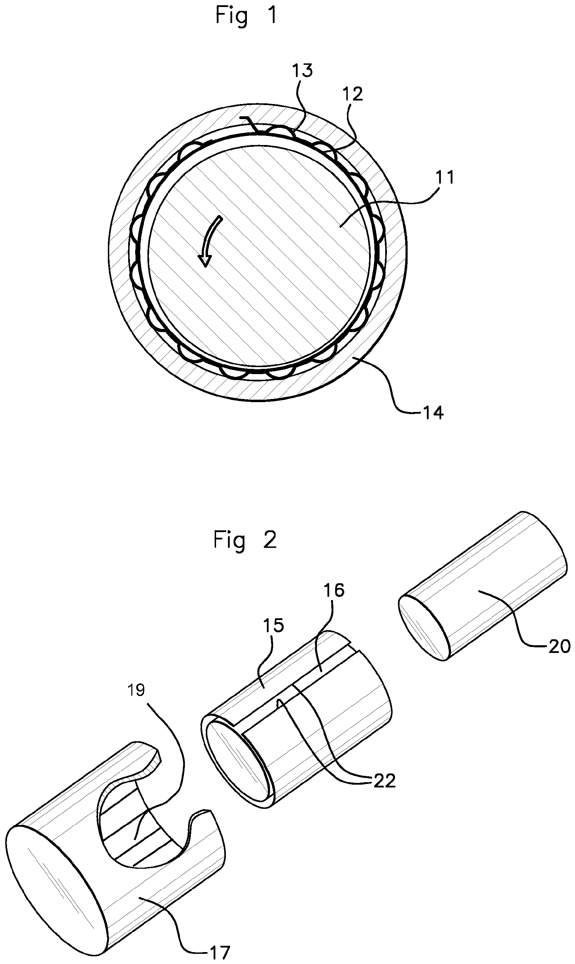

Un palier radial à feuilles dans l'exemple représenté figure 1 comprend un rotor 11, une feuille 12 lisse interne, une feuille 13 ondulée constituant un raidisseur ondulé selon l'invention, le tout dans un fourreau 14 cylindrique de révolution faisant office de stator. Dans le cas d'un palier de butée axiale, les feuilles sont disposées entre deux disques rotatifs. L'invention s'applique à la réalisation de raidisseurs ondulés de paliers à feuilles tels que le raidisseur 13 ondulé.

Pour mettre en oeuvre un procédé selon l'invention, on part d'une tôle 15, qui est initialement plane, et qui est constituée d'un superalliage austénitique à base de nickel présentant une limite d'élasticité supérieure à 500 MPa, de préférence supérieure à 700 MPa, par exemple une limite d'élasticité à 0,2 % de l'ordre de 720 MPa. En outre, on choisit ce superalliage de telle sorte que sa résistance en traction soit supérieure à 1000 MPa, notamment supérieure à 1034 MPa, pour un allongement à la rupture supérieur à 20 %.

Avantageusement, on choisit une tôle 15 en superalliage comprenant entre 5 % et 9 % de fer, plus de 70 % de nickel et cobalt dont au plus 1 % de cobalt, entre 14 % et 17 % de chrome, moins de 0,08 % de carbone, moins de 0,3 % de manganèse, moins de 0,5 % de silicium, moins de 0,01 % de soufre, entre 0,4 % et 1 % d'aluminium, entre 2,25 % et 2,70 % de titane, moins de 0,5 % de cuivre, et entre 0,7 % et 1,2 % de niobium et tantale. À titre d'exemple, on peut utiliser une tôle plane en Inconel® X-750 ayant fait l'objet d'un traitement thermique de durcissement structural préalable -notamment pendant au moins 20h à 700°C- pour lui permettre d'atteindre les propriétés mécaniques susmentionnées.

Il est à noter que cette tôle 15 peut faire l'objet de différents tests concernant la qualité de son matériau constitutif et ses propriétés mécaniques avant même la mise en oeuvre d'une étape de déformation plastique en flexion selon l'invention.

Pour fabriquer un raidisseur ondulé à partir d'une telle tôle 15, on enroule cette tôle 15 en forme de cylindre de révolution autour d'un poinçon 16 cylindrique de révolution dont la circonférence extérieure au repos est supérieure ou égale à la longueur de la tôle 15, de sorte que cette dernière puisse être enroulée autour du poinçon 16 sans jeu ni chevauchement, en moins d'une spire. La tôle 15 enroulée présente donc des bords 22 extrêmes libres parallèles à l'axe du poinçon 16 et à distance l'un de l'autre avec un certain jeu. Le poinçon 16 est en matériau élastique en compression présentant un coefficient de Poisson élevé, notamment supérieur à 0,4, de préférence de l'ordre de 0,5, par exemple un élastomère de caoutchouc.

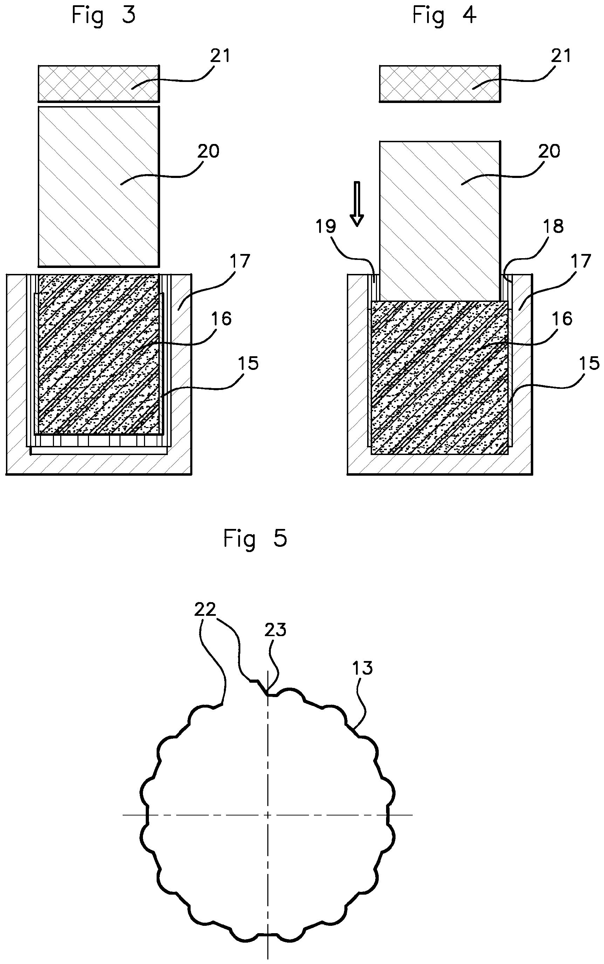

On place ensuite (figure 3) l'ensemble dans une matrice 17 présentant un alésage 18 interne borgne globalement cylindrique de révolution dont le diamètre interne correspond au moins sensiblement au diamètre externe de la tôle 15 enroulée autour du poinçon 16. De préférence, on comprime légèrement le poinçon 16 radialement en resserrant la tôle 15 enroulée autour de ce dernier (en réduisant le jeu présenté entre les bords 22 extrêmes de la tôle 15 en regard l'un de l'autre) pour pouvoir l'introduire dans l'alésage 18, dont le diamètre interne est légèrement plus faible que le diamètre externe de la tôle 15 enroulée autour du poinçon 16. De la sorte, on assure que le poinçon est appliqué sans jeu à l'intérieur de la tôle 15, cette dernière étant appliquée radialement élastiquement par le poinçon 16 contre la face interne de l'alésage 18 de la matrice 17.

L'alésage 18 de la matrice 17 présente par ailleurs des motifs 19 en creux dont les formes correspondent à celles des ondulations recherchées pour le raidisseur ondulé. Ces motifs 19 comprennent des rainures sous forme de surfaces réglées de génératrice parallèle à l'axe de symétrie de l'alésage 18. La section droite transversale des rainures des motifs 19 correspond à la forme de la section droite transversale des ondulations à former. Les motifs 19 comportent aussi une rainure (non représentée) parallèle à celles formant les ondulations en flexion mais plus profonde que ces dernières, et présentant un épaulement apte à former un repli 23 d'accroche constituant un bord extrême 22 du raidisseur 13, ce repli 23 d'accroche permettant l'accroche du raidisseur 13 dans une gorge du fourreau 14 du palier.

De préférence, la longueur axiale du poinçon 16 est supérieure à la longueur axiale de la tôle 15 enroulée autour de ce dernier, et la profondeur axiale de l'alésage 18 est elle-même supérieure à la longueur axiale du poinçon 16.

Pour former les ondulations en flexion et le repli 23 d'accroche, on comprime le poinçon 16 axialement dans la matrice 17 en déplaçant axialement un piston 20 contre l'extrémité axiale libre du poinçon 16. La compression axiale du poinçon 16 entre le piston 20 et le fond de la matrice 17 entraîne une expansion radiale de ce dernier qui plaque la tôle 15 dans les motifs 19 en creux de l'alésage 17 et entraîne une déformation plastique en flexion par emboutissage de cette dernière (figure 4).

La masse du piston 20 et le dispositif 21 qui l'entraîne axialement pour écraser le poinçon 16 sont choisis de façon à développer une énergie de déformation plastique en flexion de la tôle 15 comprise entre 10 kJ et 35 kJ en une durée comprise entre 10⁻¹⁰s et 10⁻⁵s. En pratique, on utilise un piston 20 métallique plein électriquement conducteur, de résistivité électrique aussi faible que possible, et présentant une masse supérieure ou égale à 200 g. Ce piston 20 est entraîné axialement à une vitesse supérieure à 100 m/s par un dispositif 21 qui est un générateur d'impulsion électromagnétique tel que ceux utilisés dans le formage électromagnétique (dit EMF, cf. par exemple US7954357).

Ce générateur 21 permet de décharger brusquement dans au moins une bobine, grâce à un commutateur ultrarapide, une très grande quantité d'énergie (100 kA à 1000 kA) stockée dans des condensateurs. Cette décharge instantanée crée une impulsion de champ magnétique dans la bobine, ce qui génère un courant induit au niveau du piston 20 électriquement conducteur. L'interaction entre l'impulsion de champ magnétique et le champ magnétique résultant du courant induit dans le piston provoque un déplacement brusque et à haute vitesse du piston 20 qui vient ainsi percuter le poinçon 16.

Le matériau métallique constituant le piston 20 est choisi pour présenter une résistivité électrique aussi faible que possible et pour obtenir les caractéristiques mécaniques du piston 20 lui permettant de résister à l'impact sur le poinçon 16. Il peut s'agir par exemple d'un acier inoxydable avec traitement de durcissement de sa surface tel que le Z160CDV12 avec une dureté de surface supérieure ou égale à 56 HRC.

Aux rendements près, les principes qui gouvernent ces impulsions électromagnétiques sont les suivants.

L'énergie mécanique développée par le générateur 21 d'impulsion électromagnétique correspond à l'énergie cinétique du piston qui est égale à 1/2*MP*VP², MP étant la masse du piston et VP étant la vitesse du piston.

La puissance fournie par le générateur 21 correspond à cette énergie mécanique divisée par la durée de l'impulsion électromagnétique. Cette puissance est également le produit de la tension électrique par l'intensité du courant parcourant la bobine du générateur 21.

Ainsi, par exemple, si l'on souhaite développer une énergie mécanique de 10kJ, avec une masse du piston de l'ordre de 200g, la vitesse de ce dernier doit être de 316m/s. Pour une tension d'alimentation du générateur 21 égale à 9 kV et une intensité de 100 kA, la puissance est de 900 MW, pour une durée d'impulsion électromagnétique de 1,11.10⁻⁵s.

### Exemple :

On choisit des tôles 15 planes en Inconel® X-750 présentant les dimensions suivantes : longueur : 110mm ; largeur : 30mm ; épaisseur : 0,1mm.

Chaque tôle 15 plane a fait l'objet d'un traitement thermique préalable de durcissement structural pendant au moins 20h à 700°C et présente les caractéristiques mécaniques suivantes vérifiées par des essais de traction et de dureté sur l'une d'entre elles : résistance en traction supérieure à 1000MPa ; limite d'élasticité à 0,2 % supérieure à 700MPa ; allongement à la rupture supérieur à 20% ; dureté supérieure à 390Hv.

On enroule une telle tôle 15 autour d'un poinçon 16 en élastomère de caoutchouc cylindrique de révolution présentant les dimensions suivantes : diamètre au repos 35mm; hauteur axiale : 34mm.

On introduit l'ensemble ainsi formé dans une matrice 17 constituée en acier présentant les dimensions suivantes : diamètre interne de l'alésage 18 : 36,5mm ; profondeur axiale de l'alésage 18 : 36mm ; épaisseur des parois périphériques et du fond : 5mm. L'alésage 18 est pourvue de seize rainures en creux présentant chacune les caractéristiques dimensionnelles suivantes : rayon de courbure 4mm, hauteur axiale 36mm, profondeur totale 0,55mm. L'un des bords extrêmes de la tôle 15 est placé en regard d'une rainure formant un épaulement ayant une profondeur 0,7mm qui permet de former un repli 23 d'accroche du raidisseur 13 dans le fourreau 14.

On utilise un générateur 21 d'impulsion électromagnétique pour déplacer un piston 20 métallique de 200g à une vitesse d'impact d'environ 300m/s sur le poinçon 16, soit une énergie de déformation égale à 10kJ en une durée égale à environ 10⁻⁵ s.

On obtient un raidisseur ondulé 13 tel que représenté figure 5 en une seule étape de déformation plastique. Ce raidisseur présente exactement les formes de la matrice 17 sans avoir subi de retour élastique après déformation. On constate que les caractéristiques mécaniques d'un raidisseur ainsi formé sont les suivantes par des essais de traction et de dureté sur l'un d'entre eux : résistance en traction supérieure à 1000MPa ; limite d'élasticité à 0,2 % supérieure à 700MPa ; allongement à la rupture supérieur à 20% ; dureté supérieure à 390Hv. Un tel raidisseur ondulé 13 peut être directement monté dans un palier à feuilles, sans nécessiter aucune étape supplémentaire de traitement thermique, ni de formage ni d'usinage, le raidisseur ondulé 13 pouvant être fabriqué selon l'invention en une seule étape de déformation plastique par emboutissage à haute énergie directement aux formes et dimensions appropriées pour son montage dans le palier à feuilles.

Le même essai est réalisé avec un piston 20 métallique de 200g à une vitesse d'impact d'environ 520m/s sur le poinçon 16, soit une énergie de déformation égale à 30kJ en une durée égale à environ 10⁻⁵ s. On constate une amélioration de la forme globale (cylindrique) du raidisseur par rapport à l'essai précédent. L'invention peut faire l'objet de nombreuses variantes de réalisation et de diverses applications par rapport au mode de réalisation donné à titre d'exemple ci-dessus et représenté sur les figures. En particulier, la déformation plastique de la tôle 15 peut être obtenue autrement que par un impact dynamique d'un piston sous l'effet d'un dispositif électromagnétique. En particulier, le piston 20 peut être entraîné par un dispositif du type marteau-pilon, ou à explosion à la façon d'un moteur thermique ; la déformation plastique peut même être obtenue par génération d'une explosion gazeuse directement à l'intérieur de la tôle 15 dans la matrice 17... À la place d'un piston écrasant le poinçon contre le fond de la matrice 17, on peut utiliser deux pistons entraînés axialement en sens opposés contre les deux extrémités axiales du poinçon, l'alésage de la matrice étant traversant. L'énergie de déformation plastique et la durée d'impact peuvent varier, ainsi que le choix du superalliage, en fonction des applications et des caractéristiques recherchées pour le raidisseur ondulé du palier à feuilles.

## Revendications

1. Procédé de fabrication d'un raidisseur ondulé de palier à feuilles dans lequel :
- on part d'une tôle (15) en superalliage métallique austénitique à base de nickel,
- on déforme plastiquement la tôle (15) pour lui conférer la forme du raidisseur ondulé,
**caractérisé en ce que** :
- on choisit une tôle (15) en superalliage austénitique à base de nickel présentant une limite d'élasticité supérieure à 500MPa,
- on soumet la tôle (15) à au moins une étape de déformation plastique en flexion par emboutissage selon toute son épaisseur avec une énergie de déformation supérieure à 10 kJ en une durée inférieure à 10⁻⁵s de façon à créer des ondulations en flexion.

2. Procédé selon la revendication 1 **caractérisé en ce qu'**on choisit une tôle (15) en superalliage présentant une limite d'élasticité supérieure à 700MPa, une résistance en traction supérieure à 1000MPa et un allongement à la rupture supérieur à 20 %.

3. Procédé selon l'une des revendications 1 ou 2 **caractérisé en ce qu'**on choisit une tôle (15) en superalliage comprenant entre 5 % et 9 % de fer, plus de 70 % de nickel et cobalt dont au plus 1 % de cobalt, entre 14 % et 17 % de chrome.

4. Procédé selon la revendication 3 **caractérisé en ce qu'**on choisit un superalliage comprenant en outre moins de 0,08 % de carbone, moins de 0,3 % de manganèse, moins de 0,5 % de silicium, moins de 0,01 % de soufre, entre 0,4 % et 1 % d'aluminium, entre 2,25 % et 2,70 % de titane, moins de 0,5 % de cuivre, et entre 0,7 % et 1,2 % de niobium et tantale.

5. Procédé selon l'une des revendications 1 à 4 **caractérisé en ce qu'**on choisit une tôle (15) plane présentant une épaisseur comprise entre 0,05 mm et 0,4 mm, et **en ce que** l'on réalise des ondulations en flexion présentant une hauteur de chaque ondulation comprise entre 0,2mm et 1mm, une longueur de chaque ondulation comprise entre 3mm et 10mm, et un pas entre les ondulations compris entre 4mm et 10mm.

6. Procédé selon l'une des revendications 1 à 5 **caractérisé en ce que** lors de ladite au moins une étape de déformation plastique en flexion, on réalise aussi un repli (23) d'accroche formant un bord extrême (22) du raidisseur (13).

7. Procédé selon l'une des revendications 1 à 6 **caractérisé en ce que** lors de ladite au moins une étape de déformation plastique en flexion on soumet la tôle (15) à une énergie de déformation inférieure à 35 kJ en une durée supérieure à 10⁻¹⁰s.

8. Procédé selon l'une des revendications 1 à 7 **caractérisé en ce qu'**on déforme la tôle (15) par emboutissage selon une direction au moins sensiblement normale à la tôle.

9. Procédé selon la revendication 7 **caractérisé en ce qu'**on enroule la tôle (15) sous forme d'un cylindre de révolution entre une matrice (17) externe présentant une face (18) cylindrique interne dotée de motifs (19) en creux correspondant aux ondulations à former, et un poinçon (16) cylindrique en élastomère de caoutchouc, et on comprime axialement ledit poinçon (16) cylindrique, l'expansion radiale du poinçon (16) cylindrique entraînant l'emboutissage radial de la tôle (15) dans la matrice pour former lesdites ondulations en flexion.

10. Procédé selon la revendication 9 **caractérisé en ce qu'**on comprime axialement ledit poinçon (16) cylindrique à l'aide d'au moins un piston (20) présentant une masse supérieure ou égale à 200 g entraîné axialement à une vitesse supérieure à 10 m/s.

11. Raidisseur ondulé de palier à feuilles fabriqué par un procédé selon l'une des revendications 1 à 10.

12. Raidisseur ondulé selon la revendication 11 **caractérisé en ce qu'**il présente une résistance en traction supérieure à 1000 MPa, une limite d'élasticité 0,2 % supérieure à 720 MPa, un allongement à la rupture supérieur à 20 % et une dureté supérieure à 390 HV.

13. Procédé de fabrication d'un palier à feuilles dans lequel on fabrique un raidisseur ondulé à partir d'une tôle (15) en superalliage métallique austénitique à base de nickel en déformant plastiquement la tôle (15) pour lui conférer la forme du raidisseur ondulé, et on monte chaque raidisseur ondulé dans le palier, **caractérisé en ce qu'**on fabrique le raidisseur ondulé par mise en oeuvre d'un procédé conforme à l'une au moins des revendications 1 à 10 selon une forme et des dimensions permettant son montage directement dans le palier à feuilles, et **en ce qu'**on monte le raidisseur ondulé directement issu de ce procédé de fabrication dans le palier à feuilles.

14. Palier à feuilles comprenant au moins un raidisseur ondulé selon l'une des revendications 11 ou 12.

## Patentansprüche

1. Verfahren zur Herstellung einer gewellten Versteifung eines Folienlagers, wobei:
- von einem Blech (15) aus austenitischer metallischer Superlegierung auf der Grundlage von Nickel ausgegangen wird,
- das Blech (15) plastisch verformt wird, um ihm die Form der gewellten Versteifung zu verleihen, **dadurch gekennzeichnet, dass**:
- ein Blech (15) aus austenitischer Superlegierung auf der Grundlage von Nickel gewählt wird, das eine Elastizitätsgrenze von mehr als 500 MPa aufweist,
- das Blech (15) mindestens einem Schritt des plastischen Biegeverformens durch Tiefziehen auf seiner gesamten Dicke mit einer Verformungsenergie von mehr als 10 kJ bei einer Dauer von weniger als 10⁻⁵s unterzogen wird, um Biegewellungen zu erzeugen.

2. Verfahren nach Anspruch 1, **dadurch gekennzeichnet, dass** ein Blech (15) aus Superlegierung gewählt wird, das eine Elastizitätsgrenze von mehr als 700 MPa, eine Zugfestigkeit von mehr als 1000 MPa und eine Bruchdehnung von mehr als 20 % aufweist.

3. Verfahren nach einem der Ansprüche 1 oder 2, **dadurch gekennzeichnet, dass** ein Blech (15) aus Superlegierung gewählt wird, umfassend zwischen 5 % und 9 % Eisen, mehr als 70 % Nickel und Kobalt, davon höchstens 1 % Kobalt, zwischen 14 % und 17 % Chrom.

4. Verfahren nach Anspruch 3, **dadurch gekennzeichnet, dass** eine Superlegierung gewählt wird, umfassend außerdem weniger als 0,08 % Kohlenstoff, weniger als 0,3 % Mangan, weniger als 0,5 % de Silizium, weniger als 0,01 % Schwefel, zwischen 0,4 % und 1 % Aluminium, zwischen 2,25 % und 2,70 % Titan, weniger als 0,5 % Kupfer und zwischen 0,7 und 1,2 % Niob und Tantal.

5. Verfahren nach einem der Ansprüche 1 bis 4, **dadurch gekennzeichnet, dass** ein ebenes Blech (15) gewählt wird, das eine Dicke aufweist, die im Bereich zwischen 0,05 und 0,4 mm liegt, und dadurch, dass Biegewellungen durchgeführt werden, die eine Höhe jeder Wellung im Bereich zwischen 0,2 mm und 1 mm, eine Länge jeder Wellung im Bereich zwischen 3 mm und 10 mm und eine Teilung zwischen den Wellungen im Bereich zwischen 4 mm und 10 mm aufweisen.

6. Verfahren nach einem der Ansprüche 1 bis 5, **dadurch gekennzeichnet, dass** bei dem mindestens einen Schritt des plastischen Biegeverformens auch eine Befestigungsfalte (23) durchgeführt wird, die einen äußeren Rand (22) der Versteifung (13) bildet.

7. Verfahren nach einem der Ansprüche 1 bis 6, **dadurch gekennzeichnet, dass** bei dem mindestens einen Schritt des plastischen Biegeverformens das Blech (15) einer Verformungsenergie von weniger als 35 kJ bei einer Dauer von mehr als 10⁻¹⁰s unterzogen wird.

8. Verfahren nach einem der Ansprüche 1 bis 7, **dadurch gekennzeichnet, dass** das Blech (15) durch Tiefziehen gemäß einer Richtung verformt wird, die mindestens im Wesentlichen normal zum Blech ist.

9. Verfahren nach Anspruch 7, **dadurch gekennzeichnet, dass** das Blech (15) in Form eines Drehzylinders zwischen einer externen Matrix (17), die eine interne zylindrische Seite (18) aufweist, die mit hohlen Strukturen (19) versehen ist, die den zu bildenden Wellungen entsprechen, und einem zylindrischen Stempel (16) aus Kautschukelastomer gerollt wird und der zylindrische Stempel (16) komprimiert wird, wobei die radiale Expansion des zylindrischen Stempels (16) das radiale Tiefziehen des Blechs (15) in der Matrix antreibt, um die Biegewellungen zu bilden.

10. Verfahren nach Anspruch 9, **dadurch gekennzeichnet, dass** der zylindrische Stempel (16) mit Hilfe von mindestens einem Kolben (20) komprimiert wird, der eine Masse von mehr als oder gleich 200 g aufweist, die axial mit einer Geschwindigkeit von mehr als 10 m/s angetrieben wird.

11. Gewellte Versteifung eines Folienlagers, hergestellt durch ein Verfahren nach einem der Ansprüche 1 bis 10.

12. Gewellte Versteifung nach Anspruch 11, **dadurch gekennzeichnet, dass** sie eine Zugfestigkeit von mehr als 1000 MPa, eine Elastizitätsgrenze von 0,2 % mehr als 720MPa, eine Bruchdehnung von mehr als 20 % und eine Festigkeit von mehr als 390 HV aufweist.

13. Verfahren zur Herstellung eines Folienlagers, wobei eine gewellte Versteifung auf der Grundlage eines Blechs (15) aus austenitischer metallischer Superlegierung auf der Grundlage von Nickel hergestellt wird, indem das Blech (15) plastisch verformt wird, um ihm die Form der gewellten Versteifung zu verleihen, und jede gewellte Versteifung im Lager montiert wird, **dadurch gekennzeichnet, dass** die gewellte Versteifung durch die Implantierung eines Verfahrens nach einem der Ansprüche 1 bis 10 gemäß einer Form und Abmessungen hergestellt wird, die ihre Montage direkt im Folienlager ermöglichen, und dadurch, dass die gewellte Versteifung, die direkt aus diesem Verfahren zur Herstellung stammt, in das Folienlager montiert wird.

14. Folienlager, umfassend mindestens eine gewellte Versteifung nach einem der Ansprüche 11 oder 12.

## Claims

1. A method for producing a corrugated foil-bearing stiffener, in which:
- the starting-point is a sheet (15) consisting of nickel-based austenitic metallic superalloy,
- the sheet (15) is plastically deformed in order to impart thereto the shape of the corrugated stiffener,
wherein:
- a sheet (15) is chosen consisting of nickel-based austenitic superalloy exhibiting a yield strength greater than 500 MPa,
- the sheet (15) is subjected to at least one step of plastic flexural deformation by stamping along its entire thickness with a deformation energy greater than 10 kJ within a period shorter than 10⁻⁵ s, so as to create flexural corrugations.

2. The method as claimed in claim 1, wherein a sheet (15) is chosen consisting of superalloy exhibiting a yield strength greater than 700 MPa, a tensile strength greater than 1000 MPa, and an elongation at break greater than 20 %.

3. The method as claimed in one of claims 1 and 2, wherein a sheet (15) is chosen consisting of superalloy comprising between 5 % and 9 % iron, more than 70 % nickel and cobalt, of which at most 1 % is cobalt, between 14 % and 17 % chromium.

4. The method as claimed in claim 3, wherein a superalloy is chosen including, in addition, less than 0.08 % carbon, less than 0.3 % manganese, less than 0.5 % silicon, less than 0.01 % sulfur, between 0.4 % and 1 % aluminum, between 2.25 % and 2.70 % titanium, less than 0.5 % copper, and between 0.7 % and 1.2 % niobium and tantalum.

5. The method as claimed in one of claims 1 to 4, wherein a plane sheet (15) is chosen having a thickness between 0.05 mm and 0.4 mm, and wherein flexural corrugations are produced having a height of each corrugation of between 0.2 mm and 1 mm, a length of each corrugation of between 3 mm and 10 mm, and a pitch between the corrugations of between 4 mm and 10 mm.

6. The method as claimed in one of claims 1 to 5, wherein in the course of said at least one step of plastic flexural deformation a coupling fold (23) is also realized, forming an outer edge (22) of the stiffener (13).

7. The method as claimed in one of claims 1 to 6, wherein in the course of said at least one step of plastic flexural deformation the sheet (15) is subjected to a deformation energy of less than 35 kJ within a period longer than 10⁻¹⁰ s.

8. The method as claimed in one of claims 1 to 7, wherein the sheet (15) is deformed by stamping in a direction at least substantially normal to the sheet.

9. The method as claimed in claim 7, wherein the sheet (15) is wound in the form of a cylindrical solid of revolution between an external die (17) exhibiting an internal cylindrical face (18) endowed with patterns (19) in the form of troughs corresponding to the corrugations to be formed, and a cylindrical punch (16) consisting of rubber elastomer, and said cylindrical punch (16) is axially compressed, the radial expansion of the cylindrical punch (16) bringing about the radial stamping of the sheet (15) in the die to form said flexural corrugations.

10. The method as claimed in claim 9, wherein said cylindrical punch (16) is axially compressed with the aid of at least one piston (20) having a mass greater than or equal to 200 g, which is driven axially at a speed greater than 10 m/s.

11. A corrugated foil-bearing stiffener produced by a method as claimed in one of claims 1 to 10.

12. The corrugated stiffener as claimed in claim 11, exhibiting a tensile strength greater than 1000 MPa, a 0.2 % yield strength greater than 720 MPa, an elongation at break greater than 20 %, and a hardness greater than 390 HV.

13. A method for producing a foil bearing, in which a corrugated stiffener is produced from a sheet (15) consisting of nickel-based austenitic metallic superalloy by plastically deforming the sheet (15) in order to impart thereto the shape of the corrugated stiffener, and each corrugated stiffener is mounted in the bearing, wherein the corrugated stiffener is produced by implementation of a method as claimed in at least one of claims 1 to 10 in accordance with a shape and dimensions enabling its mounting directly in the foil bearing, and wherein the corrugated stiffener resulting directly from this production method is mounted in the foil bearing.

14. A foil bearing including at least one corrugated stiffener as claimed in one of claims 11 and 12.
